# EUROPEAN PATENT APPLICATION

(11) **EP 4 350 011 A1**
(43) Date of publication of application: **10.04.2024**
(21) Application number: 22824894.4
(22) Date of filing: 08.06.2022
(51) Int. Cl.: C21B 13/02

(54) **METHOD FOR PRODUCING REDUCED IRON**

(30) Priority: 14.06.2021 JP 2021099027
(71) Applicant: JFE Steel Corporation, Tokyo 100-0011 (JP)
(72) Inventor: MORIYA, Kota, Tokyo 100-0011 (JP); TAKAHASHI, Koichi, Tokyo 100-0011 (JP); TERUI, Koki, Tokyo 100-0011 (JP); OZAWA, Sumito, Tokyo 100-0011 (JP)
(74) Representative: Hoffmann Eitle
(86) International application number: PCT/JP2022/023199
(87) International publication number: WO 2022/264904

(57) **Abstract**

Provided is a method that can achieve energy saving and CO₂ emission reduction when producing reduced iron from iron oxide. The method comprises: an iron oxide charging step of charging iron oxide into a reducing furnace; a reducing gas blowing step of blowing a reducing gas into the reducing furnace; a reduction step of reducing the iron oxide by the reducing gas in the reducing furnace; a methane synthesis step of synthesizing a gas composed mainly of methane from hydrogen gas and part of a furnace top gas discharged from a furnace top of the reducing furnace; and a gas reforming step of heating the methane and a remainder of the furnace top gas as a raw material gas and reforming the raw material gas into the reducing gas, wherein the steps are mutually connected in a circulation system, and operation is continued while supplementing carbon running short during the operation in one or more steps selected from the reducing gas blowing step, the reduction step, the methane synthesis step, and the gas reforming step or in one or more connecting parts between two or more steps selected from the reducing gas blowing step, the reduction step, the methane synthesis step, and the gas reforming step.

## Description

### TECHNICAL FIELD

The present disclosure relates to a method of producing reduced iron, and particularly to a method of producing reduced iron using a vertical reducing furnace.

### BACKGROUND

In recent years, energy saving is strongly needed in steelworks because of global environmental issues and fossil fuel depletion issues.

Main raw material of iron is iron oxide, and a reduction process of reducing iron oxide is essential. A typical reduction process most commonly used in the world is a blast furnace. In the blast furnace, coke and pulverized coal are reacted with oxygen in hot air (air heated to about 1200 °C) in a tuyere to generate CO and H₂ gases (reducing gas), and iron ore and the like in the furnace are reduced using the reducing gas. As a result of improvement in blast furnace operation technology in recent years, the reducing material ratio (the amount of coke and pulverized coal used per 1 t of hot metal production) has been reduced to about 500 kg/t. Further significant reduction of the reducing material ratio cannot be expected as the reducing material ratio has reached nearly the lower limit.

In regions where natural gas is produced, the following method is also used frequently: Agglomerated iron ore such as sintered ore or pellets is charged into a vertical reducing furnace as iron oxide raw material, and reducing gas containing hydrogen and carbon monoxide is blown into the reducing furnace to reduce the iron oxide raw material and produce reduced iron. In this method, for example, natural gas is used as raw material gas of the reducing gas. The raw material gas is heated and reformed in a heat-reformer 7 together with furnace top gas discharged from the furnace top of the reducing furnace, to generate the reducing gas. The generated reducing gas is blown into the reducing furnace and reacts with the iron oxide raw material supplied from the upper part of the reducing furnace, as a result of which the iron oxide is reduced and the reduced iron is produced. The produced reduced iron is cooled in a region below the position of the reducing furnace at which the reducing gas is blown, and then is discharged from the lower part of the reducing furnace.

The gas that has been used to reduce the iron oxide is discharged from the furnace top of the reducing furnace as the furnace top gas and subjected to dust collection and cooling. After this, part of the furnace top gas is fed into the heat-reformer 7 as raw material of reformed gas, and the remaining furnace top gas (the remainder of the furnace top gas) is used as fuel gas in the heater/heat-reformer 7. The remaining furnace top gas used as fuel gas in the heater/heat-reformer 7 is typically discharged outside the system.

As the foregoing reduced iron production process, for example, JP 2017-88912 A (PTL 1) describes a method of reforming exhaust gas of a reducing furnace and natural gas in a reformer to generate reducing gas composed mainly of CO and H₂ gases and blowing the reducing gas into the reducing furnace to reduce iron oxide in the reducing furnace and produce reduced iron.

### CITATION LIST

### Patent Literature

PTL 1: JP 2017-88912 A

### SUMMARY

### (Technical Problem)

The reduced iron production method described in PTL 1 uses natural gas for reducing gas production, and therefore CO₂ emissions are unavoidable to a certain degree although less than those of the blast furnace. Since the discharged gas contains CO₂ to a certain extent, this reduced iron production method can only reduce CO₂ emissions to a certain extent and cannot achieve zero CO₂ emissions.

It could therefore be helpful to provide a method that can achieve energy saving and CO₂ emission reduction when producing reduced iron from iron oxide.

### (Solution to Problem)

With the aim of reducing CO₂ emissions to zero in the foregoing reduced iron production method, we found that energy saving and CO₂ emission reduction can be achieved by supplying CO₂-free hydrogen from the outside to furnace top gas, which is exhaust gas from the reducing furnace, to synthesize regenerative methane and using the regenerative methane to produce reducing gas. In detail, in this reduced iron production method, all gaseous carbon sources such as CO₂ and CO contained in the exhaust gas of the reducing furnace are circulated and reused through a step of synthesizing regenerative methane. Therefore, the amount of carbon emitted as CO₂ out of the circulation (reuse) system that is composed of a step of charging iron oxide into the reducing furnace, a step of blowing reducing gas into the reducing furnace, a reduction step in the reducing furnace, a methane synthesis step of generating regenerative methane gas from furnace top gas of the reducing furnace, and a gas reforming step of generating the reducing gas from the regenerative methane gas and the furnace top gas can be reduced to zero.

Furthermore, we examined actual application of the reduced iron production method to steelworks, and found that it is necessary to secure carbon in the foregoing circulation (reuse) system (hereafter also simply referred to as "system"). In detail, a certain amount of carbon is discharged outside the system in someforms other than gas, such as carbon used to carburize reduced iron in the reducing furnace, carbon contained in the dust that accompanies the exhaust gas (furnace top gas) from the reducing furnace and is removed from the exhaust gas by a dust remover, and the like. Moreover, in a non-steady state such as when an operational trouble occurs, there is a possibility that carbon is discharged outside the system in a manner not performed during steady operation, such as diffusing the exhaust gas of the reducing furnace into the air. Given such carbon discharge outside the system, the amount of carbon circulating in the system tends to decrease. In this case, the proportion of the iron oxide reduction reaction by CO in the iron oxide reduction reaction in the reducing furnace decreases and the proportion of the reaction by H₂ increases. The iron oxide reduction reaction by CO is an exothermic reaction, whereas the iron oxide reduction reaction by H₂ is an endothermic reaction. Accordingly, if the latter reaction increases, lack of heat in the reducing furnace makes it difficult to obtain reduced iron with a sufficiently high degree of reduction.

There is a method of preheating raw material iron oxide for heat compensation. However, in the case where operation is continued without supplying a carbon source and all of the reducing gas becomes hydrogen, the preheating temperature for the raw material iron oxide is extremely high and it is difficult to handle the raw material iron oxide. Moreover, given that the original reducing furnace operation does not require preheating of the raw material, the need for additional equipment for preheating the raw material is economically disadvantageous. As for a method of increasing the reducing gas temperature for heat compensation, the increase of the reducing gas temperature causes the raw material to easily fuse together in the reducing furnace, hindering normal lowering and discharge of the raw material. In addition, troubles with the reducing gas blowing line tend to occur. Furthermore, increasing the reducing gas temperature requires additional energy as compared with the original reducing furnace operation, which is economically disadvantageous. For these reasons, increasing the reducing gas temperature is inadequate as a means for compensating for absorption of heat by H₂ reduction, as with preheating the raw material iron oxide. Hence, we newly learned that, in order to continue producing reduced iron with a sufficiently high degree of reduction in the reduced iron production in the circulation (reuse) system, a certain amount of carbon source needs to be supplied to compensate for carbon lost from the carbon circulation/reuse system.

Thus, upon careful examination to solve the above-mentioned problems of the conventional techniques and achieve production of reduced iron with a high degree of reduction in the circulation (reuse) system, we discovered the following new method of producing reduced iron.
1. A method of producing reduced iron comprising: an iron oxide charging step of charging iron oxide into a reducing furnace; a reducing gas blowing step of blowing a reducing gas into the reducing furnace; a reduction step of reducing the iron oxide by the reducing gas in the reducing furnace; a methane synthesis step of synthesizing a gas composed mainly of methane from hydrogen gas and part of a furnace top gas discharged from a furnace top of the reducing furnace; and a gas reforming step of heating the methane and a remainder of the furnace top gas as a raw material gas and reforming the raw material gas into the reducing gas, wherein the steps are mutually connected in a circulation system, and operation in the circulation system is continued while supplementing carbon running short during the operation in one or more steps selected from the reducing gas blowing step, the reduction step, the methane synthesis step, and the gas reforming step or in one or more connecting parts between two or more steps selected from the reducing gas blowing step, the reduction step, the methane synthesis step, and the gas reforming step.
2. The method of producing reduced iron according to 1., wherein the carbon is supplemented in one or both of the methane synthesis step and the gas reforming step or in each connecting part between three steps of the methane synthesis step, the gas reforming step, and the reduction step.
3. The method of producing reduced iron according to 1. or 2., wherein the carbon is a combustion gas of waste plastic.
4. The method of producing reduced iron according to 1. or 2., wherein the carbon is a combustion gas of biomass.

### (Advantageous Effect)

It is thus possible to, in a reduced iron production method involving a closed carbon circulation system in which CO₂-free hydrogen is supplied from the outside to furnace top gas of a reducing furnace to synthesize regenerative methane and the regenerative methane is used to produce reducing gas, perform operation while supplying the carbon source that runs short. Since variation in the amount of carbon circulating in the system is prevented, CO₂ emission-free operation can be performed stably. In the case where carbon-neutral raw material such as waste plastic or biomass is used as the carbon source, the effect of further reducing the environmental load of the process can be achieved in addition to the foregoing effects.

### BRIEF DESCRIPTION OF THE DRAWINGS

In the accompanying drawings:
FIG. 1 is a diagram illustrating a typical reduced iron production process using a shaft furnace;
FIG. 2 is a diagram illustrating a reduced iron production process according to the present disclosure; and
FIG. 3 is a diagram illustrating another reduced iron production process according to the present disclosure.

### DETAILED DESCRIPTION

A method according to the present disclosure will be described in detail below with reference to the drawings. First, a conventional reduced iron production process will be described in comparison with the method according to the present disclosure.

### [Conventional process]

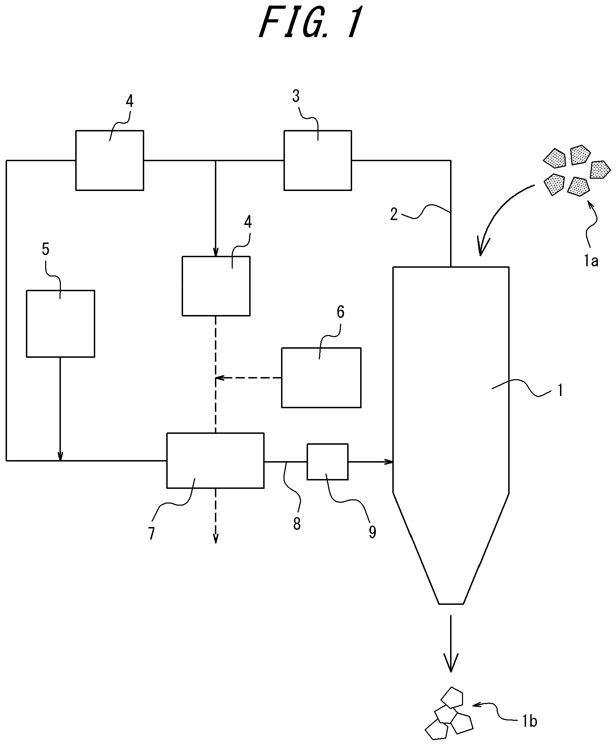

FIG. 1 is a diagram illustrating the structure of a conventional reduced iron production process using a shaft type reducing furnace. In FIG. 1, reference sign 1 is a reducing furnace, 1a is iron oxide, 1b is reduced iron, 2 is furnace top gas discharged from the reducing furnace 1, 3 is a dust remover for the furnace top gas 2, 4 is a dehydrator, 5 is natural gas supplied from the outside, 6 is air, 7 is a heat-reformer that, using heat generated by mixing part of the furnace top gas 2 with the air 6 and combusting it, heat-reforms the remainder of the furnace top gas 2 mixed with the natural gas to generate reducing gas 8 containing carbon monoxide gas and hydrogen gas, and 9 is a reducing gas blower that supplies the reducing gas into the reducing furnace 1.

The massive iron oxide raw material 1a such as sintered ore or pellets is charged into the reducing furnace 1 which is central to the reduced iron production process from its upper part, and gradually lowered in the reducing furnace 1. The high-temperature reducing gas 8 is blown into the reducing furnace 1 from its middle part to reduce the iron oxide raw material 1a, and the reduced iron 1b is discharged from the lower part of the furnace. During this, the furnace top gas 2 mainly consisting of CO, CO₂, H₂, and H₂O is discharged from the upper part of the furnace. The furnace top gas 2 is subjected to dust removal in the dust remover 3. After this, part of the furnace top gas 2 is moisture controlled and fed into the heat-reformer 7 as raw material gas. A gas containing hydrocarbon, such as the natural gas 5, is supplied into the heat-reformer 7 together with the moisture-controlled furnace top gas 2, and the supplied gases are heated. A reforming reaction occurs in the heat-reformer 7, and the high-temperature reducing gas 8 mainly consisting of CO and H₂ gases is generated and blown into the reducing furnace 1. The remaining part of the furnace top gas 2 is dehydrated, and then used as heating fuel in a combustion chamber in the heat-reformer 7 together with the air 6. The paths relating to the supply and discharge of the heating fuel used for heat-reforming are designated by the dotted lines in FIG. 1.

### [Embodiment 1]

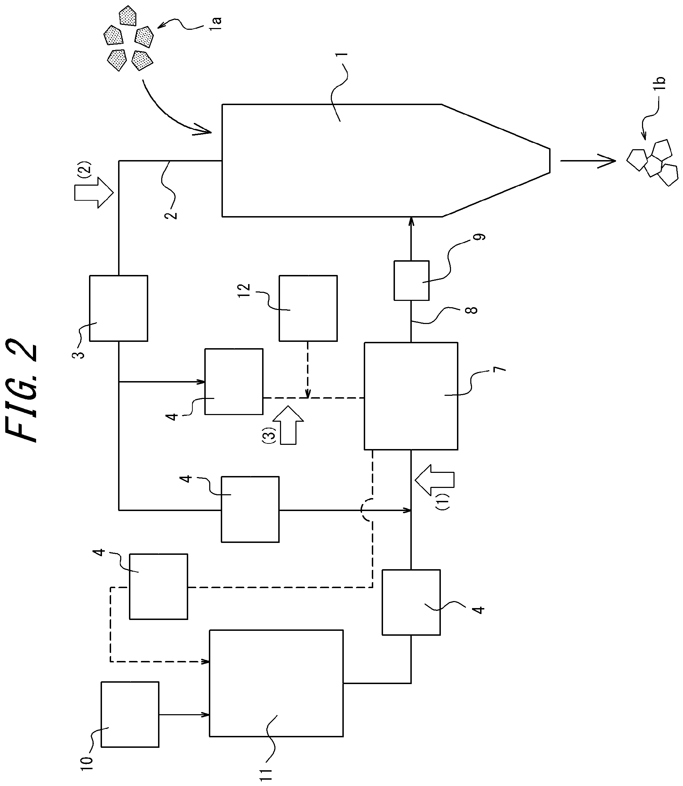

As compared with the conventional process illustrated in FIG. 1, in the present disclosure, regenerative methane generated in a methane synthesis reactor within the process is used instead of hydrocarbon gas supplied from the outside such as the natural gas 5, as illustrated in FIG. 2. In detail, in the structure of the reduced iron production process illustrated in FIG. 2, a methane synthesizer 11 is newly provided that synthesizes a gas composed mainly of methane from part of the furnace top gas 2 and hydrogen 10. The regenerative methane generated in the methane synthesizer 11 is supplied into the heat-reformer 7 together with the remainder of the furnace top gas, and is used as raw material gas for the reducing gas 8.

In the present disclosure, the "gas composed mainly of methane" synthesized in the methane synthesis step may contain water vapor (H₂O), hydrogen (H₂), nitrogen (N₂), CO, CO₂, hydrocarbon, and the like in addition to methane.

As raw material for methane synthesis in the methane synthesizer 11, the hydrogen gas 10 supplied from the outside and a gas containing at least one selected from CO and CO₂ are used. The gas containing at least one selected from CO and CO₂ may be any gas available in the steelworks. For example, exhaust gas resulting from part of the furnace top gas 2 being mixed with combustion-supporting gas and combusted in the combustion chamber in the heat-reformer 7 may be used as illustrated in FIG. 2. When combusting the furnace top gas 2 in the combustion chamber in the heat-reformer 7, not air but oxygen gas 12 is preferably used as the combustion-supporting gas to prevent nitrogen from being mixed in. The oxygen gas 12 used as the combustion-supporting gas need not necessarily be pure oxygen with an oxygen concentration of 100 %, and may contain a small amount of gas other than oxygen, such as nitrogen, carbon dioxide, and argon. If the oxygen concentration is excessively low, the gas volume increases, and the heat-reformer 7 and the methane synthesis reactor need to be increased in size. Therefore, the oxygen concentration is preferably 80 % or more. The paths relating to the supply of the heating fuel used for heat-reforming and the use of the resultant exhaust gas as raw material for methane synthesis are designated by the dotted lines in FIG. 2.

By using CO₂-free power for the production of the hydrogen gas 10 and the oxygen gas 12, CO₂ emissions can be in principle reduced to zero. Examples of the CO₂-free power that can be used include solar-generated power and nuclear-generated power.

During the operation illustrated in FIG. 2, carbon in the circulation system gradually decreases due to carburization of reduced iron, leakage of gas from the furnace body and piping included in the process, diffusion of in-system gas during unsteady operation, and the like. It is therefore necessary to compensate for the decrease in carbon. In the present disclosure, operation is performed while compensating for the decrease in carbon in one or more steps from among the reducing gas blowing step, the reduction step, the methane synthesis step, and the gas reforming step or in a connecting part between two or more steps from among the reducing gas blowing step, the reduction step, the methane synthesis step, and the gas reforming step, thus achieving stable production of reduced iron in the circulation system. In detail, since the decrease in carbon is, for example, about 30 kg at most per 1 t of reduced iron in the closed circulation system in the present disclosure, carbon supplementation is possible without significantly changing the existing line. Hence, carbon supplementation can be performed in one or more steps from among the reducing gas blowing step, the reduction step, the methane synthesis step, and the gas reforming step or in a connecting part connecting any two or more of these steps.

In the reduced iron production process illustrated in FIG. 2, carbon supplementation can be performed, for example, at one or more of the supplementation locations (1) to (3) illustrated in FIG. 2. The supplementation location (1) is the connecting part between the dehydrator 4 and the heat-reformer 7 on the path extending from the methane synthesizer 11. The supplementation location (2) is the connecting part between the reducing furnace 1 and the dust remover 3 on the path extending from the reducing furnace 1. The supplementation location (3) is the connecting part between the dehydrator 4 and the heat-reformer 7 on the path extending from the reducing furnace 1. In other words, the supplementation location (1) is the connecting part between the methane synthesis step and the gas reforming step, the supplementation location (2) is the connecting part between the reduction step and the methane synthesis step and the connecting part between the reduction step and the gas reforming step, and the supplementation location (3) is the connecting part between the reduction step and the methane synthesis step.

Given that a carbon shortage in the system increases the possibility of unstable operation as mentioned above, it is preferable to supplement carbon continuously rather than intermittently. That is, it is preferable to start carbon supplementation upon detection of a carbon shortage in the system and continue the supplementation until the carbon shortage is resolved.

How to determine the amount of carbon shortage is not limited, and examples thereof include a method of calculating the carbon shortage from the flow rates and compositions of the reducing gas blown into the reducing furnace and the furnace top gas and a method of calculating the carbon shortage from the carbon content in the product reduced iron and the reduced iron production amount. The former method of calculation from the flow rates and compositions of the reducing gas and the furnace top gas is preferable from the viewpoint of the speed of measurement. The method of calculation from the flow rates and compositions of the reducing gas and the furnace top gas involves calculating, from the results of measurement of the flow rates and compositions of the reducing gas and the furnace top gas, the amounts of substance of carbon atoms contained in the respective gases and taking the difference therebetween to be the amount of substance of carbon discharged outside the system, i.e., the amount of substance of carbon shortage. The method of calculation from the carbon content in the product reduced iron and the reduced iron production amount involves measuring the carbon content per unit amount of the product reduced iron and the product reduced iron production amount, calculating the amount of the carbon contained in the product reduced iron from the measurements and taking the calculated amount as the carbon emissions (carburization amount) to be the amount of carbon shortage.

The changes in the amount of carbon in the system due to carbon supplementation can be determined by, for example, calculating the amount of carbon contained in the reducing gas from the flow rate and composition of the reducing gas and monitoring its changes over time. In the case where the amount of carbon in the system tends to increase, the amount of carbon supplemented is excessive, and accordingly the amount of carbon supplemented is decreased. In the case where the amount of carbon in the system tends to decrease, the amount of carbon supplemented is insufficient, and accordingly the amount of carbon supplemented is increased. Thus, by monitoring the changes in the amount of carbon in the system and adjusting the amount of carbon supplemented depending on the changes, it is possible to continue operation while supplementing the right amount of carbon in the system.

In the case of changing the amount of carbon supplementation according to the changes in the amount of carbon in the system, the amount of carbon in the system used as reference is preferably set so that the degree of reduction of the product reduced iron (degree of reduction of product) will be not less than a reference value. If the reference value of the degree of reduction is 90 % or more, the energy required in the subsequent process of melting direct reduced iron (DRI) can be minimized. The reference value of the degree of reduction is more preferably 93 % or more, from the viewpoint of further reducing the energy required in the subsequent process.

Carbon supplementation may be performed by a method of introducing a gaseous carbon source such as natural gas directly into the system or by a method of combusting a gaseous, liquid, or solid carbon source and introducing the resultant combustion gas. In the case of introducing the combustion gas, it is preferable to utilize the combustion heat of the carbon source as a heat source necessary in the system, such as a heat source for the heat-reformer 7, in order to improve energy efficiency. Here, in the case of introducing the combustion gas of the carbon source into the system, the combustion gas is preferably subjected to dust removal before being introduced into the system because there is a possibility that the combustion gas contains unburned solid/liquid content such as soot and tar. For such dust removal, a new dust remover may be provided for the carbon source combustion gas, but it is more preferable to utilize existing equipment such as the dust remover for the furnace top gas.

In particular, the use of waste plastic as a solid carbon source contributes to effective utilization of carbon sources that would otherwise have been landfilled or incinerated, as a result of which the environmental load of the process can be reduced. The same applies when biomass, which is a carbon-neutral carbon source, is used as a solid carbon source. For these reasons, using waste plastic or biomass as a carbon source is more suitable as an embodiment of the present disclosure than using fossil fuel such as natural gas, coal, or oil.

Proposals have been made with regard to the conventional reduced iron production process to supply a carbon source for a purpose different from carbon supplementation in the circulation (reuse) system according to the present disclosure, such as to increase the carbon content of reduced iron. For example, JP S49-129616 A describes a method in which LPG is blown into a reducing furnace from a part below a reducing gas blowing position to carburize reduced iron while cooling it. In the case where the carbon source is supplied from the lower part of the reducing furnace as proposed in JP S49-129616 A, the carbon source supply position is outside the carbon circulation/reuse system. That is, the carbon supplied at the lower part of the reducing furnace is combined into the reduced iron before being supplied into the circulation/reuse system, and cannot compensate for the shortage in the circulation/reuse system. This technique is therefore not applicable in the present disclosure.

### [Embodiment 2]

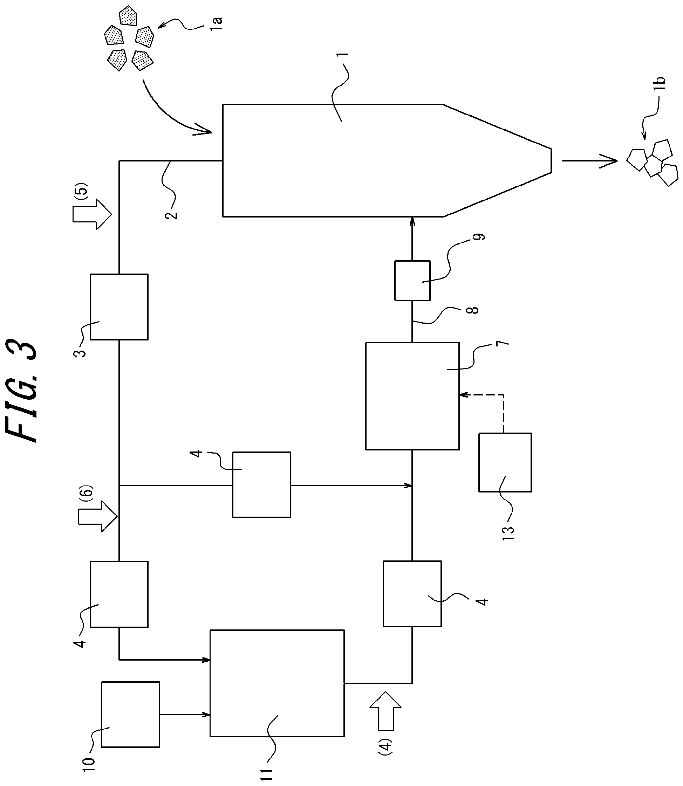

Embodiment 2 of the present disclosure is illustrated in FIG. 3. Embodiment 2 differs from Embodiment 1 (FIG. 2) in that, of the furnace top gas 2 generated from the reducing furnace 1, the furnace top gas used for heating in the heat-reformer 7 in Embodiment 1 (FIG. 2) is fed into the methane synthesizer 11 for synthesizing methane as raw material of regenerative methane. This change of the flow of the furnace top gas 2 in the system enables synthesis of the necessary amount of regenerative methane for the heat-reformer 7. Here, since no heating fuel for the heat-reformer 7 is supplied, an external CO₂-free heat source, such as a heat source 13 using CO₂-free power, may be used instead. The heat supply path from the heat source 13 is designated by the dotted line in FIG. 3. By using CO₂-free power for heating in the heat-reformer 7 and hydrogen production in this method, CO₂ emissions can be in principle reduced to zero.

In Embodiment 2, too, it is necessary to compensate for the decrease in carbon in the system. Supplementing the carbon source by the same method as in Embodiment 1 can achieve stable production of reduced iron in the circulation system. Moreover, in Embodiment 2, by using the supplemented carbon source as heating fuel for the heat-reformer 7, it is possible to reduce the amount of CO₂-free heat source used. Furthermore, the use of a carbon source such as waste plastic or biomass for supplementation can reduce the environmental load of the process as in Embodiment 1.

In the reduced iron production process illustrated in FIG. 3, carbon supplementation can be performed, for example, at one or more of the supplementation locations (4) to (6) illustrated in FIG. 3. The supplementation location (4) is the connecting part between the methane synthesizer 11 and the dehydrator 4 on the path extending from the methane synthesizer 11. The supplementation location (5) is the connecting part between the reducing furnace 1 and the dust remover 3 on the path extending from the reducing furnace 1 (the same location as (2) in FIG. 2). The supplementation location (6) is the connecting part between the dust remover 3 and the dehydrator 4 on the path extending from the reducing furnace 1. In other words, the supplementation location (4) is the connecting part between the methane synthesis step and the gas reforming step, the supplementation location (5) is the connecting part between the reduction step and the methane synthesis step and the connecting part between the reduction step and the gas reforming step, and the supplementation location (6) is the connecting part between the reduction step and the methane synthesis step.

Although the carbon supplementation locations (1) to (6) are described above as examples in the embodiments illustrated in FIGS. 2 and 3, the carbon supplementation locations are not limited to such, and carbon supplementation is possible in any step excluding the iron oxide charging step or any connecting part between such steps. However, it is desirable to exclude, from the carbon supplementation locations, the part from the exit side of the heat-reformer 7 to the entry side of the reducing furnace 1, namely, the reducing gas blowing step performed in the reducing gas blower 9, the reduction step performed in the reducing furnace 1, the connecting part between the heat-reforming step and the reducing gas blowing step, and the connecting part between the reducing gas blowing step and the reduction step. This is because, while keeping the composition of the reducing gas constant and suppressing variation in the iron oxide reduction reaction behavior in the reducing furnace is essential for stable operation of the reducing furnace, carbon supplementation in the part from the exit side of the heat-reformer 7 to the entry side of the reducing furnace 1 can cause variation in the composition of the reducing gas blown into the reducing furnace.

In the case of using combustion gas of a liquid or solid carbon source as a carbon source, it is more preferable to perform carbon supplementation in a part upstream of the dust remover on the exit side of the reducing furnace (for example, (2) in FIG. 2, (5) in FIG. 3) from the viewpoint of eliminating the need to newly provide dust removal equipment. Alternatively, it is also effective to perform carbon supplementation in the heating part of the heat-reformer or a part upstream of the heating part (for example, (3) in FIG. 2) and utilize the sensible heat of the combustion gas of the carbon source as the heat necessary for the reforming reaction.

In each of the structures in FIGS. 2 and 3 according to the present disclosure, if a small amount of unwanted gas, such as nitrogen gas for purging, other than CO, CO₂, H₂, H₂O and hydrocarbon, is mixed in, the unwanted gas gradually accumulates in the process and the reducing gas concentration decreases. In view of this, it is desirable to regularly monitor the nitrogen concentration in the system and, if the nitrogen concentration increases to a certain level, e.g. 20 % or more, temporarily discharge, to the outside of the system, the furnace top gas or the combustion exhaust gas flowing into the methane synthesis reactor. Since regenerative methane cannot be generated during this period, natural gas or the like may be temporarily blown into the heat-reformer 7 instead of regenerative methane.

H₂ supplied from the outside as raw material for methane synthesis is preferably produced by a method that causes as little CO₂ as possible. An example of such a method is electrolysis of water. The H₂ gas need not necessarily have a H₂ concentration of 100 %, but higher H₂ concentration is better in order to maintain high methane concentration in the generated regenerative methane gas. The H₂ concentration is preferably 80 vol% or more.

### EXAMPLES

Examples of the present disclosure will be described below. The following will describe operation specifications as consumption rates per 1 t of reduced iron (DRI) production. For example, in the case where 1300 kg of sintered ore is used per 1 t of reduced iron (DRI) production, the amount of sintered ore used is expressed as 1300 kg/t. For a reduced iron plant of 3000 t/day, multiplying the following specifications by 3000 yields specifications per 1 day. As a criterion for continuing steady operation, a degree of reduction of product of 90 % or more was set from the viewpoint of the efficiency of dissolving and smelting DRI in subsequent steps. Herein, the degree of reduction of product is an index expressing, in percentage, the ratio of the oxygen atomic weight (mass%) derived from iron oxides contained in the product to the oxygen atomic weight (mass%) derived from Fe₂O₃ on the assumption that all of the product total iron content (T.Fe) is Fe₂O₃. Table 1 shows representative specifications among the operating conditions and operating results of Examples 1 to 6 and Comparative Example.

[Table 1]

**[Table 1]**

| Specifications | | | Unit | Example 1 | Example 2 | Example 3 | Example 4 | Example 5 | Example 6 | Comparative Example |
|---|---|---|---|---|---|---|---|---|---|---|
| Reduced iron production amount | | | bd | 3000 | 3000 | 3000 | 3000 | 3000 | 3000 | 3000 |
| Sintered ore charging amount | | | kg/t | 1342 | 1342 | 1342 | 1342 | 1342 | 1342 | 1342 |
| Reducing gas blowing amount | | | Nm³/t | 2200 | 2200 | 2200 | 2200 | 2200 | 2200 | 2200 |
| Reducing gas temperature | | | °C | 800 | 800 | 800 | 800 | 800 | 800 | 800 |
| Reducing gas composition | | H₂ | % | 62 | 62 | 62 | 62 | 62 | 62 | 100 |
| | | CO | % | 38 | 38 | 38 | 38 | 38 | 38 | 0 |
| Furnace top gas amount | | | Nm³/t | 2181 | 2181 | 2181 | 2181 | 2181 | 2181 | 2200 |
| Pre-branch flow rate | | | Nm³/t | 2181 | 2202 | 2181 | 2181 | 2202 | 2181 | 2200 |
| | (Raw material gas) | | Nm³/t | 1576 | 1522 | 1576 | 1576 | 1522 | 1576 | 1821 |
| | (Used for regenerative methane reaction) | | Nm³/t | 0 | 0 | 0 | 605 | 680 | 605 | 0 |
| | (Combusted in heating furnace and then used for regenerative methane reaction) | | Nm³/t | 605 | 680 | 605 | 0 | 0 | 0 | 379 |
| Hydrogen for regenerated methane | | | Nm³/t | 918 | 1046 | 993 | 455 | 529 | 529 | 742 |
| Carbon source | | Type | - | Natural gas | Biomass | Waste plastic | Natural gas | Biomass | Waste plastic | None |
| | | Supply amount | kg/t | 13.3 | 11.7 | 15.7 | 13.3 | 11.7 | 15.7 | - |
| Degree of reduction of product | | | % | 92.9 | 93.1 | 93.1 | 93.3 | 92.7 | 93.2 | 85.4 |
| Evaluation | | | - | ○ | ○ | ○ | ○ | ○ | ○ | × |

Examples 1 to 3 according to the present disclosure are each an example of producing reduced iron according to the reduced iron production process illustrated in FIG. 2. In detail, 1342 kg/t of sintered ore is charged into the reducing furnace 1 from the upper part as raw material, and 2200 Nm³/t of high-temperature reducing gas (H₂: 62 %, CO: 38 %) heated to 800 °C is blown into the reducing furnace from the middle part. Then, 2181 Nm³/t of furnace top gas (H₂: 48 %, CO: 29 %, CO₂: 9 %, H₂O: 14 %) is discharged from the upper part of the reducing furnace. The reason why the volume of the furnace top gas discharged is less than the volume of the reducing gas blown in is because carbon carburizes reduced iron in the reducing furnace.

The furnace top gas is subjected to dust removal, and then part of the furnace top gas is used as raw material gas (corresponding to "(raw material gas)" in Table 1) and the remaining furnace top gas is used as heating fuel gas for the heat-reformer 7 (corresponding to "(combusted in heating furnace and then used for regenerative methane reaction)" in Table 1). The heating fuel gas is dehydrated, and then combusted in the combustion chamber in the heat-reformer 7 using pure oxygen generated by a cryogenic separation process driven with CO₂-free power. The whole amount of exhaust gas from the combustion chamber in the heat-reformer 7 is recovered and dehydrated, and the dehydrated combustion exhaust gas (CO₂: 100 %) is fed into the methane synthesizer 11 for methane synthesis. Hydrogen generated by electrolysis using CO₂-free power (corresponding to "(hydrogen for regenerative methane)" in Table 1) is added into the methane synthesizer 11 to synthesize regenerative methane gas. The synthesized regenerative methane gas is dehydrated, and then fed into the heat-reformer 7 together with the raw material gas and used as raw material of reducing gas. In this process, a carbon source needs to be supplied in the event of a carbon shortage in the system as mentioned above.

### [Example 1]

In Example 1, natural gas was selected as the carbon source, and the natural gas was directly supplied into the system from the supplementation location (1) illustrated in FIG. 2. The required supply amount of the natural gas calculated from the amount of carbon in the product DRI and the amount of carbon in the furnace top gas dust was 13.3 kg/t. Under this condition, the operating conditions were examined so that the high-temperature reducing gas having the foregoing temperature and composition could be blown into the reducing furnace, and it was determined to use 1576 Nm³/t of the furnace top gas as raw material gas and the remaining 605 Nm³/t of the furnace top gas as heating fuel gas for the heat-reformer 7. The raw material gas was partially dehydrated so as to balance input with output of hydrogen and oxygen atoms in the entire system. The heating fuel gas was dehydrated, and then combusted with pure oxygen and used in the heat-reformer 7. The whole amount of exhaust gas after the combustion was recovered and dehydrated, and then blown into the methane synthesizer 11. The exhaust gas was reacted with 918 Nm³/t of hydrogen in the methane synthesizer 11 to synthesize a gas composed mainly of methane. The synthesized gas was dehydrated, and then fed into the heat-reformer 7 together with the raw material gas and the natural gas as the carbon source and used as raw material for reducing gas. Reduced iron produced by this method had a degree of reduction of product of 92.9 %, demonstrating that the method of Example 1 enables continued steady operation.

### [Example 2]

In Example 2, biomass made from wood was selected as the carbon source, and the combustion gas of the biomass was directly supplied into the system from the supplementation location (2) illustrated in FIG. 2. In the case where carbon supplementation is performed at the supplementation location (2) illustrated in FIG. 2, the dust remover for the furnace top gas can be used as a dust remover for the combustion gas of the biomass. The required supply amount of the biomass calculated from the amount of carbon in the product DRI, the amount of carbon in the furnace top gas dust, and the amount of carbon in the biomass was 11.7 kg/t. Under this condition, the operating conditions were examined so that the high-temperature reducing gas having the foregoing temperature and composition could be blown into the reducing furnace, and it was determined to use 1522 Nm³/t of the gas obtained by adding the combustion gas of the biomass to the furnace top gas (corresponding to "pre-branch flow rate" in Table 1) as raw material gas and the remaining 680 Nm³/t of the gas as heating fuel gas for the heat-reformer 7. The raw material gas was partially dehydrated so as to balance input with output of hydrogen and oxygen atoms in the entire system. The heating fuel gas was dehydrated, and then combusted with pure oxygen and used in the heat-reformer 7. The whole amount of exhaust gas after the combustion was recovered and dehydrated, and then blown into the methane synthesizer 11. The exhaust gas was reacted with 1046 Nm³/t of hydrogen in the methane synthesizer 11 to synthesize a gas composed mainly of methane. The synthesized gas was dehydrated, and then fed into the heat-reformer 7 together with the raw material gas and used as raw material for reducing gas. Reduced iron produced by this method had a degree of reduction of product of 93.1 %, demonstrating that the method of Example 2 enables continued steady operation.

### [Example 3]

In Example 3, waste plastic composed mainly of urethane was selected as the carbon source, and the combustion gas of the waste plastic was subjected to dust removal and then supplied into the system from the supplementation location (3) illustrated in FIG. 2. The required supply amount of the waste plastic calculated from the amount of carbon in the product DRI, the amount of carbon in the furnace top gas dust, and the amount of carbon in the waste plastic was 15.7 kg/t. Under this condition, the operating conditions were examined so that the high-temperature reducing gas having the foregoing temperature and composition could be blown into the reducing furnace, and it was determined to use 1576 Nm³/t of the furnace top gas as raw material gas and the remaining 605 Nm³/t of the furnace top gas as heating fuel gas for the heat-reformer 7. The raw material gas was partially dehydrated so as to balance input with output of hydrogen and oxygen atoms in the entire system. The heating fuel gas was dehydrated, then mixed with the combustion gas of the waste plastic, and then combusted with pure oxygen and used in the heat-reformer 7. The whole amount of exhaust gas after the combustion was recovered and dehydrated, and then blown into the methane synthesizer 11. The exhaust gas was reacted with 993 Nm³/t of hydrogen in the methane synthesizer 11 to synthesize a gas composed mainly of methane. The synthesized gas was dehydrated, and then fed into the heat-reformer 7 together with the raw material gas and used as raw material for reducing gas. Reduced iron produced by this method had a degree of reduction of product of 93.1 %, demonstrating that the method of Example 3 enables continued steady operation.

As described above, with the methods of producing reduced iron of Examples 1 to 3, operation can be performed with zero CO₂ emissions while achieving the target degree of reduction of product.

Examples 4 to 6 according to the present disclosure are each an example of producing reduced iron according to the reduced iron production process illustrated in FIG. 3. In detail, the conditions of the sintered ore charged into the reducing furnace 1, the reducing gas blown into the reducing furnace 1, the furnace top gas discharged from the furnace top, and the raw material gas used as reforming raw material are the same as those in Example 1. The remaining furnace top gas after the raw material gas is extracted is dehydrated and then fed into the methane synthesizer 11 as raw material for synthesis of regenerative methane (corresponding to "(used for regenerative methane reaction)" in Table 1). Hydrogen generated by electrolysis using CO₂-free power is added into the methane synthesizer 11 to synthesize regenerative methane gas. The synthesized regenerative methane gas is fed into the heat-reformer 7 and used as raw material of reducing gas. In Examples 4 to 6, heating fuel for the heat-reformer 7 is not supplied, and instead CO₂-free power is supplied from the outside to perform electrical heating. In this process, a carbon source needs to be supplied in the event of a carbon shortage in the system, as in Examples 1 to 3.

### [Example 4]

In Example 4, natural gas was selected as the carbon source, and the natural gas was directly supplied into the system from the supplementation location (4) illustrated in FIG. 3. The required supply amount of the natural gas was 13.3 kg/t, as in Example 1. Under this condition, the operating conditions were examined so that the high-temperature reducing gas having the foregoing temperature and composition could be blown into the reducing furnace, and it was determined to use 1576 Nm³/t of the furnace top gas as raw material gas. The raw material gas was partially dehydrated so as to balance input with output of hydrogen and oxygen atoms in the entire system. The remaining 605 Nm³/t of the furnace top gas was dehydrated and then blown into the methane synthesizer 11 as raw material gas for the regenerative methane reactor. The gas was reacted with 455 Nm³/t of hydrogen in the methane synthesizer 11 to synthesize a gas composed mainly of methane. The synthesized gas was mixed with the natural gas as the carbon source. The mixed gas was dehydrated, and then fed into the heat-reformer 7 together with the raw material gas and used as raw material for reducing gas. Reduced iron produced by this method had a degree of reduction of product of 93.3 %, demonstrating that the method of Example 4 enables continued steady operation.

### [Example 5]

In Example 5, biomass made from wood was selected as the carbon source, and the combustion gas of the biomass was directly supplied into the system from the supplementation location (5) illustrated in FIG. 3. In the case where carbon supplementation is performed at the supplementation location (5) illustrated in FIG. 3, the dust remover for the furnace top gas can be used as a dust remover for the combustion gas of the biomass. The required supply amount of the biomass was 11.7 kg/t, as in Example 2. Under this condition, the operating conditions were examined so that the high-temperature reducing gas having the foregoing temperature and composition could be blown into the reducing furnace, and it was determined to use 1522 Nm³/t of the gas obtained by adding the combustion gas of the biomass to the furnace top gas (corresponding to "pre-branch flow rate" in Table 1) as raw material gas. The raw material gas was partially dehydrated so as to balance input with output of hydrogen and oxygen atoms in the entire system. The remaining 680 Nm³/t of the gas was dehydrated and then blown into the methane synthesizer 11 as raw material gas for the regenerative methane reactor. The gas was reacted with 529 Nm³/t of hydrogen in the methane synthesizer 11 to synthesize a gas composed mainly of methane. The synthesized gas was dehydrated, and then fed into the heat-reformer 7 together with the raw material gas and used as raw material for reducing gas. Reduced iron produced by this method had a degree of reduction of product of 92.7 %, demonstrating that the method of Example 5 enables continued steady operation.

### [Example 6]

In Example 6, waste plastic composed mainly of urethane was selected as the carbon source, and the combustion gas of the waste plastic was subjected to dust removal and then supplied into the system from the supplementation location (6) illustrated in FIG. 3. The required supply amount of the waste plastic was 15.7 kg/t, as in Example 3. Under this condition, the operating conditions were examined so that the high-temperature reducing gas having the foregoing temperature and composition could be blown into the reducing furnace, and it was determined to use 1576 Nm³/t of the furnace top gas as raw material gas. The raw material gas was partially dehydrated so as to balance input with output of hydrogen and oxygen atoms in the entire system. A mixed gas of the remaining 605 Nm³/t of the gas and the combustion gas of the waste plastic was dehydrated and then blown into the methane synthesizer 11 as raw material gas for the regenerative methane reactor. The gas was reacted with 529 Nm³/t of hydrogen in the methane synthesizer 11 to synthesize a gas composed mainly of methane. The synthesized gas was mixed with the combustion gas of the waste plastic as the carbon source. The mixed gas was dehydrated, and then fed into the heat-reformer 7 together with the raw material gas and used as raw material for reducing gas. Reduced iron produced by this method had a degree of reduction of product of 93.2 %, demonstrating that the method of Example 6 enables continued steady operation.

As described above, with the methods of producing reduced iron of Examples 4 to 6, operation can be performed with zero CO₂ emissions while achieving the target degree of reduction of product. Although electricity was used as the energy source for the heating furnace in Examples 4 to 6, the energy source does not need to be electricity as long as it is CO₂-free. For example, heating may be performed using combustion heat of hydrogen generated by electrolysis using CO₂-free power.

### [Comparative Example]

Comparative Example in the present disclosure will be described below. Operation was started under the same conditions as in Example 1 with regard to the sintered ore charged into the reducing furnace, the reducing gas blown into the reducing furnace, the furnace top gas discharged from the furnace top, and the raw material gas used as reforming raw material in the reduced iron production process illustrated in FIG. 2. The difference from Example 1 is that the operation was continued without supplying a carbon source that would have been necessary. As a result, while the composition of the reducing gas was H₂:CO = 62:38 in the initial stage of operation, carbon atoms were gradually discharged from the system and eventually the system was forced to operate under the condition of H₂:CO = 100: 0. In such operation, all of the reducing gas became hydrogen, CO₂ being raw material for methane was not generated. Since there was no need to reform methane, the methane synthesizer 11 and the heat-reformer 7 were unnecessary.

Specifically, as shown in Table 1, using, of 2200 Nm³/t furnace top gas of the reducing furnace (H₂: 80 %, H₂O: 20 %), 1821 Nm³/t as raw material gas and 379 Nm³/t as combustion gas for the heating furnace, hydrogen generated by electrolysis of water using CO₂-free power was supplied to the raw material gas to perform operation while compensating for the total hydrogen consumption of 742 Nm³/t, which is the sum of the hydrogen consumption due to the reduction of raw material sintered ore in the reducing furnace and the hydrogen consumption as the heat source of the heat-reformer 7. This resulted in all of the iron oxide reduction reaction in the reducing furnace being an endothermic reaction, so that the amount of heat supplied into the reducing furnace was insufficient for the amount of heat required to sufficiently reduce iron oxide and the degree of reduction of product of product DRI decreased to 85.4 %. Since this value was lower than 90 %, which is the reference degree of reduction of product that would allow continued steady operation, the operation by the method of Comparative Example was forced to be discontinued.

This demonstrates that, with the method of producing reduced iron according to Comparative Example, CO₂ emissions are zero but the target degree of reduction of product cannot be achieved and it is difficult to continue steady operation.

### REFERENCE SIGNS LIST

- 1: reducing furnace
- 1a: iron oxide
- 1b: reduced iron
- 2: furnace top gas
- 3: dust remover
- 4: dehydrator
- 5: natural gas
- 6: air
- 7: heat-reformer
- 8: reducing gas
- 9: reducing gas blower
- 10: hydrogen
- 11: methane synthesizer
- 12: oxygen gas
- 13: heat source

## Claims

1. A method of producing reduced iron comprising:
an iron oxide charging step of charging iron oxide into a reducing furnace;
a reducing gas blowing step of blowing a reducing gas into the reducing furnace;
a reduction step of reducing the iron oxide by the reducing gas in the reducing furnace;
a methane synthesis step of synthesizing a gas composed mainly of methane from hydrogen gas and part of a furnace top gas discharged from a furnace top of the reducing furnace; and
a gas reforming step of heating the methane and a remainder of the furnace top gas as a raw material gas and reforming the raw material gas into the reducing gas, wherein the steps are mutually connected in a circulation system, and
operation in the circulation system is continued while supplementing carbon running short during the operation in one or more steps selected from the reducing gas blowing step, the reduction step, the methane synthesis step, and the gas reforming step or in one or more connecting parts between two or more steps selected from the reducing gas blowing step, the reduction step, the methane synthesis step, and the gas reforming step.

2. The method of producing reduced iron according to claim 1, wherein the carbon is supplemented in one or both of the methane synthesis step and the gas reforming step or in each connecting part between three steps of the methane synthesis step, the gas reforming step, and the reduction step.

3. The method of producing reduced iron according to claim 1 or 2, wherein the carbon is a combustion gas of waste plastic.

4. The method of producing reduced iron according to claim 1 or 2, wherein the carbon is a combustion gas of biomass.
